# EUROPEAN PATENT APPLICATION

(11) **EP 1 780 586 A1**
(43) Date of publication of application: **02.05.2007**
(21) Application number: 06122872.2
(22) Date of filing: 24.10.2006
(51) Int. Cl.: G02F 1/13357, G02B 27/00

(54) **Liquid Crystal Display**

(30) Priority: 27.10.2005 KR 20050101795
(71) Applicant: Samsung Electronics Co., Ltd., Suwon-si 442-742 Gyeonggi-Do (KR)
(72) Inventor: PARK, Joon-chan, Gyeonggi-do (KR); HONG, Chang-wan, Gyeonggi-do (KR); JEON, Kee-uk, Seoul (KR); PARK, Yung-jun, Gyeonggi-do (KR)
(74) Representative: Robinson, Ian Michael

(57) **Abstract**

A liquid crystal display comprises: a light source unit (20); a light converting unit (40) for receiving light from the light source unit (20) and converting a polarization property and a brightness distribution of the received light; a screen (71) for receiving the converted light from the light converting unit (41) and improving a frontal brightness of the converted light; and a liquid crystal display panel (10) disposed in front of the screen (71).

Thus, the present invention provides a liquid crystal display having high light efficiency without using an expensive optical film.

## Description

The present invention relates to a liquid crystal display. More particularly, the present invention relates to a liquid crystal display having a good light efficiency without using an optical film.

A liquid crystal display (LCD) comprises an LCD panel. The LCD panel comprises a thin film transistor (TFT) substrate on which TFTs are formed, a color filter substrate on which color filters are formed and a liquid crystal layer disposed therebetween. Since the LCD panel does not emit light by itself, the LCD may comprise a backlight unit in back of the TFT substrate. The transmittance of the light generated from the backlight unit is adjusted according to an arrangement of the liquid crystal layer.

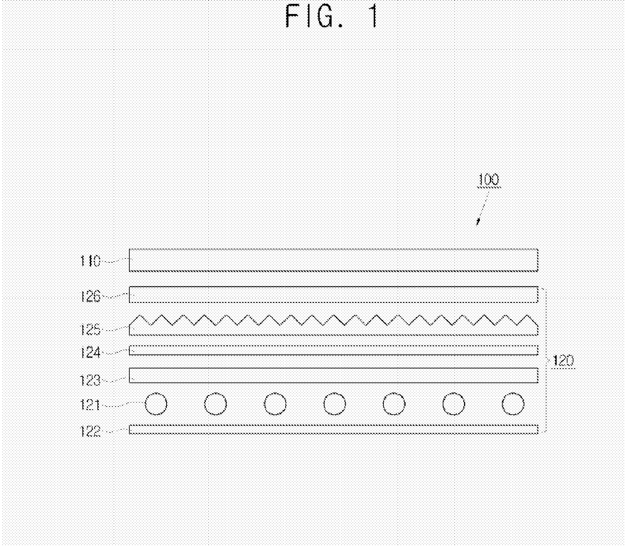

Figure 1 is a drawing illustrating a conventional LCD.

The LCD 100 comprises an LCD panel 110 and a backlight unit 120 providing light with the LCD panel 110.

The backlight unit 120 comprises lamps 121 arranged in a row, a reflecting plate 122 disposed in back of the lamps 121 and optical films 123, 124, 125 and 126 disposed in front of the lamps 121.

The lamps 121 may be provided as a cold cathode fluorescent lamp (CCFL) or an external electrode fluorescent lamp (EEFL). The light generated from each of the lamps 121 is radiated in all directions. The light radiated toward a lower direction is reflected by the reflecting plate 122 and directed toward the diffusion plate 123.

The diffusion plate 123 comprises diffusion members and diffuses the light generated from the lamps 121. Accordingly, the LCD 100 has uniform brightness distribution. In using a line light source such as a lamp 121, bright lines may be generated according to the arrangement of the line light source. The diffusion plate 123 may reduce the occurrence of the bright lines.

The diffusion film 124 comprises fine particles having a ball shape to diffuse the incident light, and thus a uniformity of the light and the brightness in a front direction are increased.

On the prism film 125, prisms are formed to increase brightness in a front direction. Two or more prism films 125 may be used.

The reflecting polarization film 126 reflects light having different polarizing directions. The polarizing direction of the reflected light is switched by the diffusion plate 123 and the reflecting plate 122, and then the switched light re-enters the reflecting polarization film 126. Accordingly, a polarization efficiency is increased.

However, a manufacturing cost is increased due to a high cost of the prism film 125 and the reflecting polarization film 126. The cost of the prism film 125 and the reflecting polarization film 126 is particularly high for a large-sized LCD 100.

Accordingly, there is a need for an improved liquid crystal display having high efficiency without an expensive film.

Exemplary embodiments of the present invention address at least the above problems and/or disadvantages and provide at least the advantages described below. Accordingly, it is an object of the present invention to provide a liquid crystal display having high light efficiency without using an expensive optical film.

According to the present invention there is provided an apparatus and method as set forth in the appended claims. Preferred features of the invention will be apparent from the dependent claims, and the description which follows.

The foregoing and/or other aspects of the present invention can be achieved by providing a liquid crystal display comprising: a light source unit; a light converting unit for receiving light from the light source unit and converting a polarization property and a brightness distribution of the received light; a screen for receiving the converted light from the light converting unit and improving a frontal brightness of the converted light; and a liquid crystal display panel disposed in front of the screen.

According to the embodiment of the present invention, the liquid crystal display further comprises a Fresnel structure at an emitting surface of the screen.

According to the embodiment of the present invention, the light converting unit comprises a polarization converting system converting incident non-polarized light into S waves.

According to the embodiment of the present invention, the light converting unit comprises a polarization converting system converting incident non-polarized light into P waves.

According to the embodiment of the present invention, the light converting unit further comprises a light tunnel.

According to the embodiment of the present invention, the light source unit comprises: a lamp for generating light; and a lamp reflector which surrounds the lamp and reflects the light generated from the lamp toward the light converting unit.

According to the embodiment of the present invention, the lamp reflector comprises an ellipsoidal type and the light from the light source unit passes through the polarization converting system and enters the light tunnel.

According to the embodiment of the present invention, the liquid crystal display further comprises a condenser lens disposed between the polarization converting system and the light tunnel, wherein the lamp reflector comprises a parabolic type and the light from the light source unit passes through the light converting unit and enters the light tunnel.

According to the embodiment of the present invention, the light converting unit further comprises an array of fly eye lenses provided in a pair and facing each other.

According to the embodiment of the present invention, the light source unit comprises: a lamp for generating light; a lamp reflector of a parabolic type which surrounds the lamp and reflects the light from the lamp toward the light converting unit.

According to the embodiment of the present invention, the light from the light source unit passes through the array of the fly eye lenses and enters the polarization converting system.

According to the embodiment of the present invention, the polarization converting system comprises a sub polarization converting system corresponding to each lens of the array of the fly eye lenses.

According to the embodiment of the present invention, the liquid crystal display further comprises a reflecting mirror which is disposed between the light converting unit and the screen and diverts a progressive path of the light.

According to the embodiment of the present invention, the liquid crystal display further comprises an ultraviolet filter disposed between the light source unit and the light converting unit for blocking incident ultraviolet rays.

According to the embodiment of the present invention, the liquid crystal display further comprises a diffusion sheet disposed between the liquid crystal display panel and the screen.

The above and/or other aspects, features and advantages of the prevent invention will become apparent and more readily appreciated from the following description of the exemplary embodiments, taken in conjunction with the accompany drawings, in which:
Figure 1 is a drawing illustrating a conventional LCD;
Figure 2 is a drawing illustrating a configuration of the LCD according to a first exemplary embodiment of the present invention;
Figure 3 is a drawing illustrating a polarization converting system of the LCD according to the first exemplary embodiment of the present invention;
Figure 4 is a drawing illustrating a light tunnel of the LCD according to the first exemplary embodiment of the present invention;
Figure 5 is a drawing illustrating a screen of the LCD according to the first exemplary embodiment of the present invention;
Figures 6 and 7 illustrate LCDs according to a second and a third exemplary embodiment of the present invention, respectively.

Throughout the drawings, the same drawing reference numerals will be understood to refer to the same elements, features, and structures.

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness. Reference will now be made in detail to exemplary embodiments of the present invention. The exemplary embodiments are described below so as to explain the present invention by referring to the drawings.

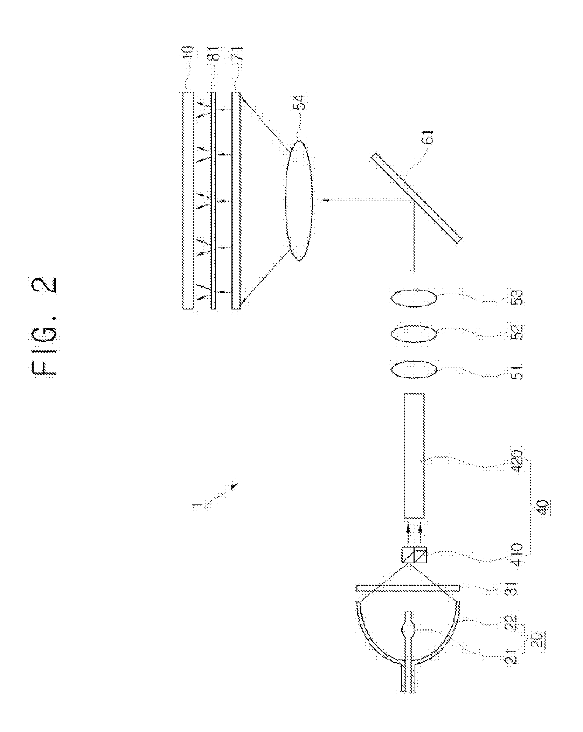

An LCD according to a first exemplary embodiment of the present invention will be described referring to Figures 2 through 5.

As shown in Figures 2 through 5, an exemplary LCD 1 of the present invention comprises an LCD panel 10, a light source unit 20, a light converting unit 40 and a screen 71. An ultraviolet filter 31 is disposed between the light source unit 20 and the light converting unit 40, a reflecting mirror 61 is disposed between the light converting unit 40 and the screen 71, and a diffusion film 81 is disposed between the LCD panel 10 and the screen 71. The LCD 1 further comprises various optical lenses 51 through 54.

The light source unit 20 comprises a lamp 21 generating light and a lamp reflector 22. The lamp 21 generates white-colored and non-polarized light. The lamp reflector 22 reflects the light generated from the lamp 21 to guide a progressive direction of the light.

The lamp reflector 22 may be of a parabolic type or an ellipsoidal type. The ellipsoidal type has a first focal point corresponding to the lamp 21 and a second focal point on which light is concentrated. The parabolic type makes parallel light from the light reflected by the lamp reflector 22. The lamp reflector 22 is of the ellipsoidal type in the first exemplary embodiment of the present invention.

The light generated from the light source unit 20 is concentrated on the second focal point by the lamp reflector 22 and passes through the ultraviolet filter 31 while the light is concentrated. An ultraviolet ray incident on the light converting unit 40 is reduced by the ultraviolet filter 31.

A polarization converting system 410 for converting a polarization state of the incident light and a light tunnel 420 are disposed in the light converting unit 40 in order.

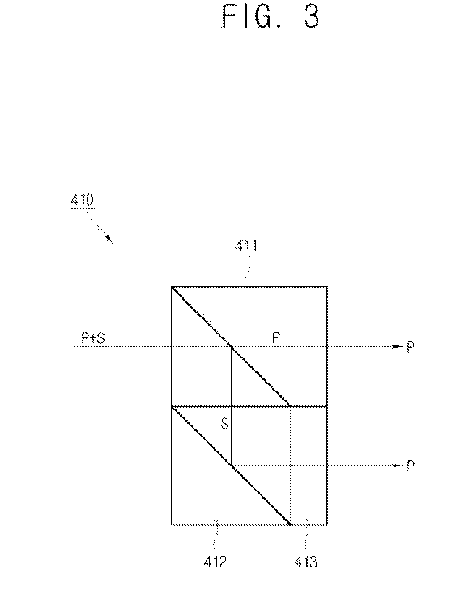

As shown in Figure 3, the polarization converting system 410 comprises a polarization separation member 411, a reflecting member 412 and a half wavelength plate 413. The polarization separation member 411 transmits most of P-polarized light and reflects most of S-polarized light. The S-polarized light and the P-polarized light cross each other at a right angle. The reflecting member 412 reflects the S-polarized light from the polarization separation member 411 and makes the reflected light progress in parallel with the P-polarized light. The half wavelength plate 413 is disposed in a progressive path of the S-polarized light and coverts the S-polarized light into the P-polarized light. Accordingly, the light generated from the light source unit 20 is converted into the P-polarized light and then enters the light tunnel 420.

In another exemplary embodiment, the polarization separation member 411 may reflect the P-polarized light and the half wavelength plate 413 may convert the reflected P-polarized light into the S-polarized light. Then, the light generated from the light source unit 20 is converted into S-polarized light and enters the light tunnel 420.

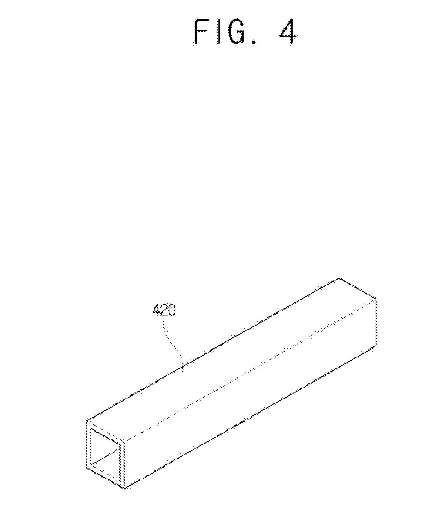

As shown in Figure 4, the light tunnel 420 has a hollow square pillar shape and the inner surface comprises light reflecting material such as a mirror. The incident light into the light tunnel 420 is repeatedly reflected by the inner surface, and thus light having uniform brightness distribution is emitted from the light tunnel 420.

The light emitted from the light tunnel 420 passes through the optical lenses 51, 52 and 53 and then enters the reflecting mirror 61. The reflecting mirror 61 diverts the progressive direction of the incident light toward the screen 71. In an exemplary embodiment, the diversion is by 90°.

If the light source unit 20, the light converting unit 40, the screen 71 and the LCD panel 10 are disposed in a row, the thickness of the LCD 1 may be increased significantly. The increased thickness is addressed with the reflecting mirror 61. The light source unit 20 and the light converting unit 40 may be disposed in parallel with a surface of the LCD panel 10 and may be disposed in a lower part of the LCD panel 10. Alternatively, additional mirrors may be installed between the light converting unit 40 and the optical lens 51 as necessary.

The light reflected by the reflecting mirror 61 passes through the optical lens 54 and is transferred to the screen 71.

The screen 71 has a size corresponding to the LCD panel 10. The screen 71 improves the front brightness.

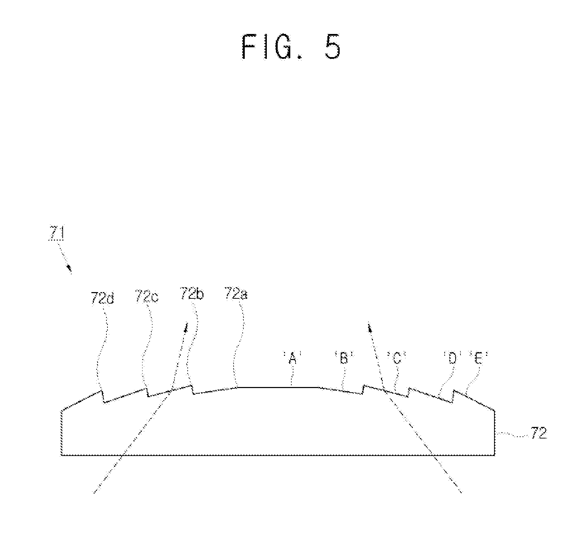

As shown in Figure 5, a Fresnel lens 72 is provided at a light emitting surface of the screen 71. The Fresnel lens 72 comprises a plurality of concentric circles 72a, 72b, 72c and 72d. Each of the concentric circles 72a, 72b, 72c and 72d is protruded to have a serration shape. While a central exit surface A is relatively flat, circumferential exit surfaces B, C, D, and E are inclined toward the central exit surface A. Inclination angles of the circumferential exit surfaces B, C, D and E get smaller towards the central exit surface A. The light entering the Fresnel lens 72 is emitted vertically to the Fresnel lens 72, and thus the frontal brightness is increased.

The uniformity of the light emitted from the screen 71 increases as it passes through the diffusion film 81, and then enters the LCD panel 10. A viewing angle is increased by the diffusion film 81.

According to the first exemplary embodiment, the polarization converting system 410 converting a polarization state of the incident light is used in place of a conventional reflecting polarization film. The screen 71, increasing the frontal brightness of the incident light, is used in place of a conventional prism film. Also, the light tunnel 420, increasing the uniformity of the incident light, is used in place of a conventional diffusion plate.

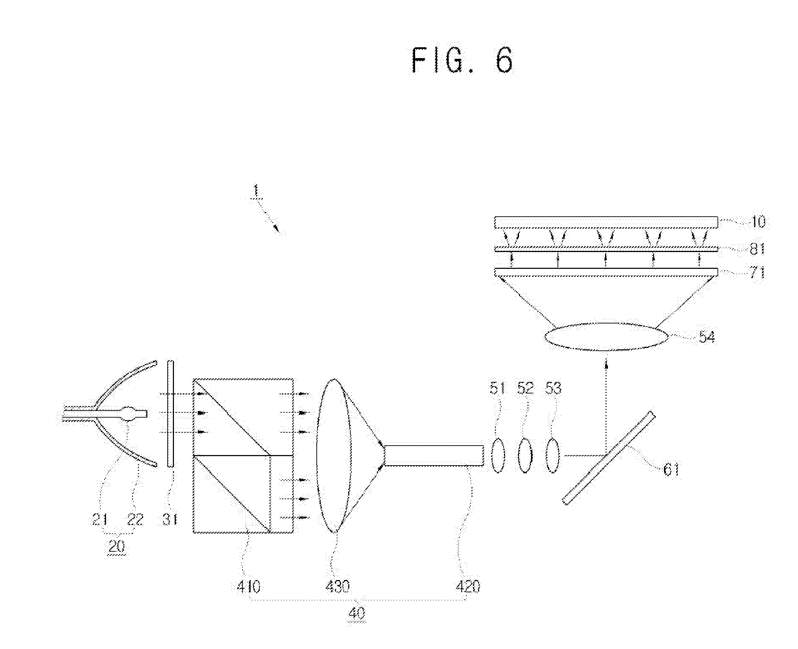

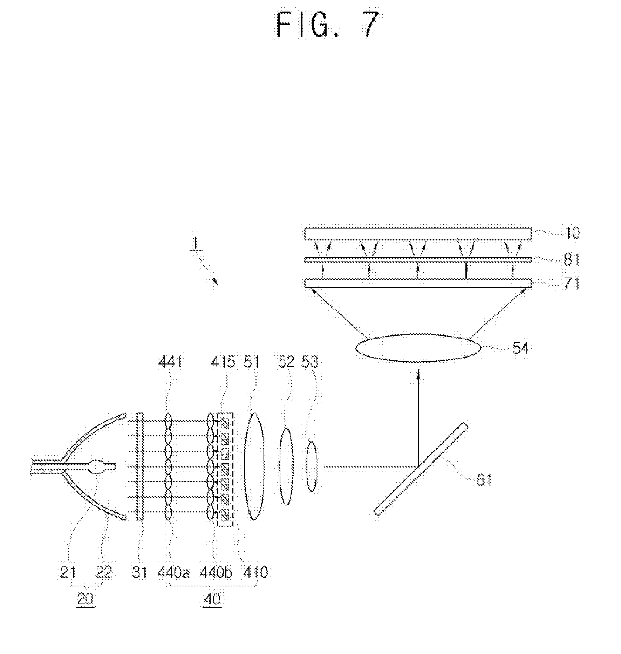

Figures 6 and 7 illustrate LCDs according to a second and a third exemplary embodiment of the present invention, respectively.

The LCD 1 according to a second exemplary embodiment has a lamp reflector 22 of a parabolic type. The light emitted from a light source unit 20 progresses in parallel.

The light emitted from the light source unit 20 passes through a polarization converting system 410 and is converted into P-polarized light. The polarization converting system 410 is provided having a larger size as compared with the first exemplary embodiment because the light entering the polarization converting system 410 is not concentrated on a focal point. In this configuration, the incident angle of the light entering the polarization converting system 410 is decreased, and thus a polarization efficiency of the polarization converting system 410 is increased.

The light from the polarization converting system 410 passes through a condenser lens 430 and is concentrated. Then, the concentrated light enters into the light tunnel 420 located at the focal point of the condenser lens 430.

An LCD 1 according to a third exemplary embodiment has a lamp reflector 22 of a parabolic type. The light emitted from a light source unit 20 progresses in parallel.

The light emitted from the light source unit 20 enters an array of fly eye lenses 440a and 440b. The array of the fly eye lenses 440a and 440b is provided in a pair and faces each other. The light from the array of the fly eye lenses 440a and 440b has uniform distribution and enters a polarization converting system 410. The incident angle of the light entering the polarization converting system 410 is decreased as in the second exemplary embodiment, and thus the polarization efficiency of the polarization converting system 410 is increased.

The polarization converting system 410 comprises a sub polarization converting system 415. Each sub polarization converting system 415 corresponds to each lens 441 of the array of the fly eye lens 440b from which the light exits. In the aforementioned exemplary embodiments, the light source unit 20 and the light converting unit 40 may provide light for the large-sized LCD panel 10 without an increase in size. Accordingly, if a large-sized LCD panel 10, for example, an LCD panel of 40 inches or more is used, a backlight unit may be provided at low cost.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A liquid crystal display comprising:
a light source unit (20);
a light converting unit (41) for receiving light from the light source unit (20) and converting a polarization property and a brightness distribution of the received light;
a screen (71) for receiving the converted light from the light converting unit (41) and improving a frontal brightness of the converted light; and
a liquid crystal display panel (10) disposed in front of the screen (71).

2. The liquid crystal display according to claim 1, further comprising a Fresnel structure (72) at an emitting surface of the screen (71).

3. The liquid crystal display according to claim 1 or 2, wherein the light converting unit (41) comprises a polarization converting system (410) converting incident non-polarized light into S waves.

4. The liquid crystal display according to claim 1 or 2, wherein the light converting unit (41) comprises a polarization converting system (410) converting incident non-polarized light into P waves.

5. The liquid crystal display according to claim 4, wherein the light converting unit (41) further comprises a light tunnel (420).

6. The liquid crystal display according to claim 5, wherein the light source unit (20) comprises:
a lamp (21) for generating light; and
a lamp reflector (22) which surrounds the lamp (21) and reflects the light generated from the lamp (21) toward the light converting unit (41).

7. The liquid crystal display according to claim 6, wherein the lamp reflector (22) comprises an ellipsoidal type and the light from the light source unit (20) passes through the polarization converting system (410) and enters the light tunnel (420).

8. The liquid crystal display according to claim 6, further comprising a condenser lens (430) disposed between the polarization converting system (410) and the light tunnel (420), wherein the lamp reflector (22) comprises a parabolic type and the light from the light source unit (20) passes through the light converting unit (41) and enters the light tunnel (420).

9. The liquid crystal display according to claim 4, wherein the light converting unit (41) further comprises an array of fly eye lenses (440a, 440b) provided in a pair and facing each other.

10. The liquid crystal display according to claim 9, wherein the light source unit (20) comprises:
a lamp (21) for generating light;
a lamp reflector (22) of a parabolic type which surrounds the lamp (21) and reflects the light from the lamp (21) toward the light converting unit (41).

11. The liquid crystal display according to claim 10, wherein the light from the light source unit (20) passes through the array of the fly eye lenses (440a, 440b) and enters the polarization converting system (410).

12. The liquid crystal display according to claim 11, wherein the polarization converting system (410) comprises a sub polarization converting system (415) corresponding to each lens of the array of the fly eye lenses 440a, 440b).

13. The liquid crystal display according to any preceding claim, further comprising a reflecting mirror (61) which is disposed between the light converting unit (41) and the screen (71) and diverts a progressive path of the light.

14. The liquid crystal display according to any preceding claim, further comprising an ultraviolet filter (31) disposed between the light source unit (20) and the light converting unit (41) for blocking incident ultraviolet rays.

15. The liquid crystal display according to preceding claim, further comprising a diffusion sheet (81) disposed between the liquid crystal display panel (10) and the screen (71).
